# EUROPÄISCHE PATENTSCHRIFT

(11) **EP 1 658 469 B1**
(45) Veröffentlichungstag und Bekanntmachung des Hinweises auf die Patenterteilung: **08.10.2008**
(21) Anmeldenummer: 04762722.9
(22) Anmeldetag: 27.08.2004
(51) Int. Cl.: G01B 7/06

(54) **VORRICHTUNG ZUM VERMESSEN DER DICKE UND/ODER LÄNGE VON OBJEKTEN**
APPARATUS FOR MEASURING THE THICKNESS AND/OR LENGTH OF ARTICLES
DISPOSITIF POUR MESURER L'EPAISSEUR ET/OU LA LONGUEUR D'OBJETS

(30) Priorität: 27.08.2003 DE 10339778
(43) Veröffentlichungstag der Anmeldung: 24.05.2006
(60) Teilanmeldung: 08007358.8
(73) Patentinhaber: Kraemer, Thilo, 64291 Darmstadt (DE)
(72) Erfinder: Kraemer, Thilo, 64291 Darmstadt (DE)
(74) Vertreter: Mierswa, Klaus
(86) Internationale Anmeldenummer: PCT/DE2004/001894
(87) Internationale Veröffentlichungsnummer: WO 2005/026657

(56) Entgegenhaltungen:
- DE-U- 20 206 782
- US-A- 4 393 717
- US-A- 5 029 304
- US-A- 5 757 180

## Beschreibung

Die Erfindung betrifft eine Vorrichtung zum Vermessen der Dicke und/oder Länge von Objekten von fester oder gelartiger Konsistenz, insbesondere von pharmazeutischen Objekten, wie Tabletten, Pillen oder Oblongs.

Es sind magnetische Längenmesssysteme bekannt, welche mittels eines Magnetbandes mit Polteilung und einem Magnetfeldsensor arbeiten, der dem Magnetband gegenüberstehend montiert ist. Das Magnetband steht dabei fest und der Magnetfeldsensor ist berührungslos und damit weitestgehend verschleißfrei und gegen Verschmutzungen unempfindlich. Der Magnetfeldsensor benötigt ein Kabel zur Weiterleitung der elektrischen Impulse, wobei bei der Bewegung des Magnetfeldsensors das Kabel geschleppt werden muss und dieses schleppkettentauglich sein muss, was einen erhöhten Aufwand an Material und Kosten verursacht. Beim Vorbeifahren der Polteilungen des Magnetbandes am Magnetfeldsensor gibt dieser elektrische Signale aus, welche einer Auswerteelektronik aufgegeben und gezählt wird. Die aufgrund der Polteilung des Magnetbandes erhaltenen elektrischen Signale des Magnetfeldsensors werden in der Auswerteelektronik gezählt und entsprechend der Polteilung in eine Längenmessung transformiert.

Durch die Firma Fritz Kübler GmbH, www.kuebler.com, Veröffentlichungsvermerk R1002250310003ES, 78054 Villingen-Schwenningen, ist ein derartiges lineares Messsystem bekannt geworden, bestehend aus einem beweglichen Magnetsensor und einem feststehenden Magnetmessband mit einem Polabstand von 2mm von Pol zu Pol, so dass sich alle 2mm ein periodisches Indexsignal als Zählimpulse ergibt. Der Magnetsensor erreicht eine Auflösung von 0,025mm bei Vierfachauswertung bzw. von 0,05mm-0,1 mm. Somit bedeutet die Aufeinanderfolge von zwei benachbarten Zählimpulsen die Zurücklegung einer vorbestimmten Wegstrecke des Magnetsensors, die durch dessen Auflösung bestimmt ist.

US-A-5 029 304 beschreibt eine Vorrichtung zum Vermessen der Dicke oder Länge eines Objekts. Die Vorrichtung besteht aus einer Basis mit einer Auflagefläche für das Objekt. Ein magnetisches Längenmesssystem ist senkrecht zur Basis vorgesehen. Dieses besteht aus einem beweglich angeordneten Magnetband mit einer Vielzahl von Polteilungen, an dem ein Fühler zur Anlage an das zu vermessende Objekt befestigt ist. Dem Magnetband gegenüber ist ein feststehender Magnetfeldsensor angeordnet, an dem das Magnetband bei der Messung vorbeibewegt wird und der mit einer Auswerteschaltung verbunden ist.

In der pharmazeutischen Industrie müssen bei der Herstellung von pharmazeutischen Objekten, wie Tabletten, Pillen oder Oblongs, verschiedene Parameter der Objekte, oft fortlaufend, überprüft und gemessen werden, wie zum Beispiel das Gewicht, die Zerberstkraft oder die Dicke oder Länge. Die bisher verwendeten

Messeinrichtungen zum Vermessen der Dicke oder Länge von Tabletten, Pillen oder Oblongs arbeiten entweder zu langsam oder zu ungenau oder beides.

Aus der US 4,393,717 ist eine Vorrichtung zum Prüfen von medizinischen Tabletten auf Dicke, Durchmesser und Härte hervor, mit einer Auflage für die Tabletten und einer Anschlagplatte. Diese ist Teil eines Stempels, welcher mittels eines Luftdruckzylinders vertikal so verfahren werden kann, dass die Anschlagplatte von oben auf der Tablette aufsetzt. Aus der Vertikalposition des Stempels bei auf der Tablette aufliegender Anschlagplatte kann die Dicke der Tablette bestimmt werden. Die Vertikalposition des Stempels wird mittels einer Diode und eines Photopotentiometers gemessen. Die Dicke der Tablette kann mittels eines weiteren, horizontal vefahrbaren Stempels bestimmt werden, dessen Horizontalposition ebenfalls mittels einer Diode und eines Photopotentiometers gemessen wird. Der Bewegungsablauf wird mittels eines Computers gesteuert.

Gegenstand der DE 202 06 782 U1 ist eine Vorrichtung zur Oblongzentrierung und Breitenmessung zur Tablettenprüfung, die im Bereich der Transportbahn der Prüflinge montierbar ist. Zwei Prüfbacken sind durch einen Antrieb so zusammenführbar, dass die Prüfbacken den Prüfling zwischen sich haltern und ausrichten. Die Prüfbackenbilden ferner nach geringfügigem Öffnen der Prüfbacken eine Führung gegen Wegdrehen des Prüflings. Wenn die Prüfbacken am Prüfling anliegen, wird der Abstand der Prüfbacken als Maß für die Breite des Prüflings erfasst.

Der Erfindung liegt die Aufgabe zugrunde, bei einer Vorrichtung zum Vermessen der Dicke von Objekten von fester oder gelartiger Konsistenz, insbesondere von pharmazeutischen Objekten, wie Tabletten, Pillen oder Oblongs, ein magnetisches Längenmesssystem für eine derartige Vorrichtung dienstbar zu machen.

Die Aufgabe wird gelöst durch ein Vorrichtung zum Vermessen der Dicke und/oder Länge von Objekten von fester oder gelartiger Konsistenz, insbesondere von pharmazeutischen Objekten, wie Tabletten, Pillen oder Oblongs, wobei dieselbe aus einer Basis besteht, auf welcher sich eine Säule senkrecht erhebt, und entweder die Basis oder die Säule oder beide eine Auflagefläche für das zu messende Objekt aufweisen, wobei längs der Säule ein magnetisches Längenmesssystem angeordnet ist, bestehend aus einem mit einer Vielzahl von Polteilungen versehenen Magnetband und einem dem Magnetband gegenüberstehend befindlichen, feststehend montierten Magnetfeldsensor und mit einer an den Magnetfeldsensor angeschlossenen elektrischen Auswerteschaltung, wobei das Magnetband längs der Säule am Magnetfeldsensor vorbei motorisch beweglich montiert ist, und an dem Magnetband ein auskragender Arm angreift, welcher die Bewegung des Magnetbandes mitzumachen imstande ist, zur Anlage an dem zu messenden Objekt, wobei entweder das Magnetband zu einer Schleife geformt ist und über zwei Walzen läuft, von denen eine Walze im Bereich der Basis und die andere Walze am entgegen gesetzten Ende der Säule angeordnet ist, oder das Magnetband auf einem zu einer geschlossenen Schleife geformten Band angeordnet ist und das Band über zwei Walzen läuft, von denen eine Walze im Bereich der Basis und die andere Walze am entgegen gesetzten Ende der Säule angeordnet ist.

Die Vorrichtung weist den aus US-A-5 029 304 bekannten Vorteil auf, dass aufgrund der Tatsache, dass der Magnetfeldsensor feststehend montiert ist und das Magnetband beweglich auf und ab bzw. hin und her verschieblich angeordnet ist, keine bewegliche Kabelführung des Magnetfeldsensors vorhanden, ist, sondern nur eine mechanische Bewegung des Magnetbandes gegeben ist. Die ansonsten notwendige Schleppkettentauglichkeit des Kabels entfällt. Eine derartige Ausgestaltung, dass nämlich das Magnetband verfährt und der Magnetfeldsensor feststeht, ist für die Vermessung von kurzen Strecken am besten geeignet, wobei es sich bei der Dickenmessung von derartigen Objekten, wie es pharmazeutische Objekte, Tabletten, Pillen oder Oblongs in der Regel sind, um kurze zu vermessende Strecken handelt. Das magnetische Längenmesssystem ist hier ein translatorisches arbeitendes Längenmesssystem.

### Kurzbeschreibung der Zeichnung, in der zeigen:

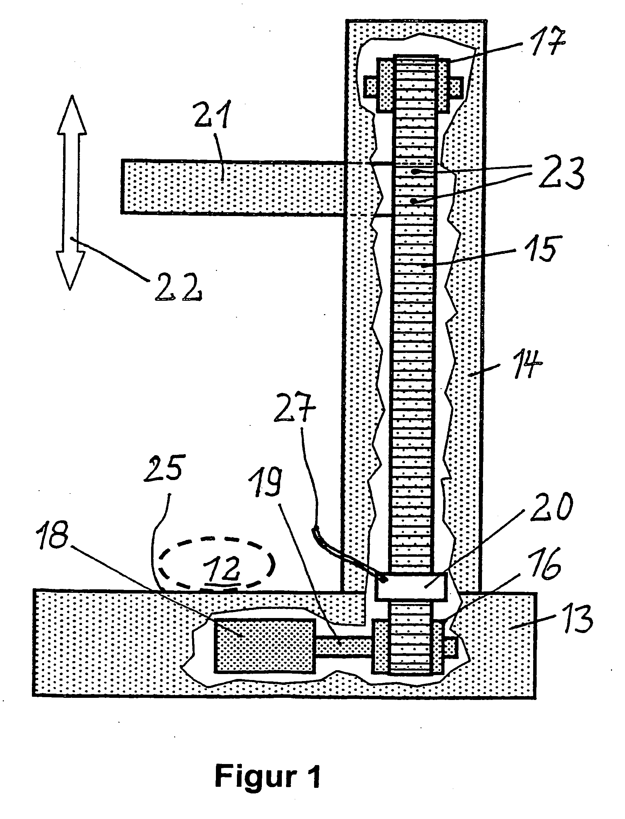

- Figur 1: eine Vorrichtung zum Vermessen der Dicke und/oder Länge von Objekten, die ein Magnetband aufweist, das endlos umlaufend gestaltet ist.

Figur 1 zeigt die erfindungsgemäße Vorrichtung vorzugsweise zur Dickenmessung eines Objektes 12. Auf einer vorzugsweise waagrecht angeordneten Basis 13 erhebt sich senkrecht und somit vorzugsweise vertikal zur Basis 13 eine Säule 14, wobei die Längsachse der Säule 14 parallel der Normalen einer Auflage 25 für das Objekt 12 gerichtet ist. Innerhalb der Basis 13 ist eine erste oder untere Walze 16 angeordnet, montiert auf eine Antriebswelle 19, welche mittels eines Elektromotors 18 unter Mitnahme der Walze 16 antreibbar ist. Am oberen Ende der Säule 14 ist eine zweite oder obere Walze 17 drehbar gelagert, wobei um beide Walzen 16, 17, ein endloses Band 15 geschlungen ist. Das Band 15 kann entweder ein mit Polteilungen versehenes Magnetband sein oder das Band 15 kann ein flexibles Stahl- oder Kunststoffband sein, auf welches wenigstens teilweise in Längsrichtung des Bandes 15 ein Magnetband mit Polteilung aufgebracht ist, welches somit translatorisch bewegbar ist.

Des Weiteren kragt ein Arm 21 waagrecht über die Auflagefläche 25 für das Objekt 12 hinweg, wobei der Arm 21 am Band 15 mittels Schrauben 23 befestigt ist. Dem Magnetband 15 gegenüberstehend ist ein feststehender Magnetfeldsensor 20 montiert.

Bei Drehen der unteren Antriebswalze 16 mittels des Elektromotors 18 läuft das Magnetband 15 unter Mitnahme des Armes 21 über den Magnetfeldsensor 20 hinweg, so dass der Magnetfeldsensor elektrisch-magnetische Zählimpulse liefert, welche in einer Auswerteschaltung ausgewertet und verarbeitet werden können und somit eine Messung der Dicke des Objektes 12 erfolgen kann. Die in Figur 1 gezeigte Vorrichtung ist um 90 Grad nach rechts im Uhrzeigersinn geklappt anwendbar, so dass in diesem Fall auch die Länge eines Objektes gemessen werden kann.

### Gewerbliche Anwendbarkeit:

Die Erfindung ist insbesondere im pharmazeutischen Bereich zur Dicken- und/oder Längenvermessung von Tabletten, Pillen oder Oblongs gewerblich anwendbar. Aufgrund der hohen Genauigkeit der heute erhältlichen magnetischen Längenmesssysteme können derartige pharmazeutische Produkte sehr genau hinsichtlich ihrer Dicke bzw. Länge vermessen werden, wobei die Erfindung mit beweglichem Endlosband, welche das Magnetband trägt, eine sehr schnelle Messaufnahme gestattet.

### Bezugszeichenliste

- 13: Basis
- 14: Säule
- 15: Magnetband
- 20: Magnetfeldsensor
- 18: Elektromotor
- 21: Arm
- 23: Schrauben
- 12: Objekt
- 16,17: Walzen
- 19: Antriebswelle
- 22: Bewegungsdoppelpfeil
- 25: Auflagefläche des Objektes
- 27: Kabel

## Patentansprüche

1. Vorrichtung zum Vermessen der Dicke und/oder Länge von Objekten (12) von fester oder gelartiger Konsistenz, insbesondere von pharmazeutischen Objekten, wie Tabletten, Pillen oder Oblongs, wobei die Vorrichtung aus einer Basis (13) besteht, auf welcher sich eine Säule (14) senkrecht erhebt, und entweder die Basis oder die Säule oder beide eine Auflagefläche (25) für das zu messende Objekt (12) aufweisen, wobei längs der Säule (14) ein magnetisches Längenmesssystem angeordnet ist, bestehend aus einem mit einer Vielzahl von Polteilungen versehenen Magnetband (15) und einem dem Magnetband (15) gegenüberstehend befindlichen, feststehend montierten Magnetfeldsensor und mit einer an den Magnetfeldsensor (20) angeschlossenen elektrischen Auswerteschaltung, wobei das Magnetband (15) längs der Säule (14) am Magnetfeldsensor (20) vorbei motorisch beweglich montiert ist, und an dem Magnetband (15) ein auskragender Arm (21) angreift, welcher die Bewegung des Magnetbandes (15) mitzumachen imstande ist, zur Anlage an dem zu messenden Objekt, **dadurch gekennzeichnet, dass**
- entweder das Magnetband (15) zu einer Schleife geformt ist und über zwei Walzen (16,17) läuft, von denen eine Walze (16) im Bereich der Basis (13) und die andere Walze (17) am entgegen gesetzten Ende der Säule (14) angeordnet ist,
- oder das Magnetband (15) auf einem zu einer geschlossenen Schleife geformten Band angeordnet ist und das Band über zwei Walzen (16,17) läuft, von denen eine Walze (16) im Bereich der Basis (13) und die andere Walze (17) am entgegen gesetzten Ende der Säule (14) angeordnet ist.

## Claims

1. A device for measuring the thickness and/or length of objects (12) having a solid or gel-like consistency, especially pharmaceutical objects, such as tablets, pills or capsules, whereby the device consists of a base (13) on which a column (14) stands perpendicularly, and either the base or the column or both have a contact surface (25) for the object (12) that is to be measured, whereby a magnetic length measuring system is arranged along the column (14) and is made up of a magnetic strip (15) provided with a plurality of pole pitches and of a stationarily mounted magnetic field sensor located opposite from the magnetic strip (15) and with an electrical evaluation circuit connected to the magnetic field sensor (20), whereby the magnetic strip (15) is mounted so that it can be moved by a motor along the column (14) past the magnetic field sensor (20), and a cantilevered arm (21) that is capable of accompanying the movement of the magnetic strip (15) engages with the magnetic strip (15) for purposes of being positioned against the object that is to be measured, **characterized in that**
• either the magnetic strip (15) is shaped to form a loop and it runs over two rollers (16, 17), of which one roller (16) is arranged in the area of the base (13) while the other roller (17) is arranged on the opposite end of the column (14),
• or the magnetic strip (15) is arranged on a strip shaped to form a closed loop and the strip runs over two rollers (16, 17), of which one roller (16) is arranged in the area of the base (13) while the other roller (17) is arranged on the opposite end of the column (14).

## Revendications

1. Dispositif de mesure de l'épaisseur et/ou de la longueur d'objets (12) de consistance solide ou de consistance de gélule, en particulier d'objets pharmaceutiques tels que des comprimés, des pilules ou des oblongs, ledit dispositif comprenant une base (13) sur laquelle se dresse perpendiculairement une colonne (14), la base ou la colonne ou toutes les deux présentant une surface d'appui (25) pour l'objet (12) à mesurer, un système mesureur de longueur magnétique étant disposé le long de la colonne (14) et comprenant une bande magnétique (15) dotée d'une pluralité de pas polaires ainsi qu'un capteur de champ magnétique fixe monté en face de ladite bande magnétique et présentant un circuit électrique d'évaluation connecté au capteur de champ magnétique (20), la bande magnétique (15) pouvant se déplacer le long de la colonne (14) à l'aide d'un moteur en passant derrière le capteur de champ magnétique (20), et un bras en saillie (21) relié à la bande magnétique (15) étant en mesure de suivre le mouvement de la bande magnétique pour être placé sur l'objet à mesurer, **caractérisé en ce que**
- ou la bande magnétique (15) forme une boucle et passe sur deux rouleaux (16,17), l'un des rouleaux (16) étant disposé dans la zone de la base (13) et l'autre (17) à l'extrémité opposée de la colonne (14),
- ou la bande magnétique (15) est disposée sur une bande formant une boucle fermée qui passe sur deux rouleaux (16,17), l'un des rouleaux (16) étant disposé dans la zone de la base (13) et l'autre (17) à l'extrémité opposée de la colonne (14).
